# EUROPÄISCHE PATENTANMELDUNG

(11) **EP 1 856 984 A1**
(43) Veröffentlichungstag der Anmeldung: **21.11.2007**
(21) Anmeldenummer: 07005639.5
(22) Anmeldetag: 20.03.2007
(51) Int. Cl.: A23G 9/50

(54) **Stiel zur Halterung eines Lebensmittels, insbesondere von Speiseeis**

(30) Priorität: 06.05.2006 DE 10621226
(71) Anmelder: Trade Wave GmbH, 34123 Kassel (DE)
(72) Erfinder: Manss, Mike, D-34596 Bad Zwesten (DE); Arndt, Ralf H, D-34260 Kaufungen (DE)
(74) Vertreter: Walther, Robert

(57) **Zusammenfassung**

Gegenstand der Erfindung ist ein Stiel zur Halterung eines Lebensmittels, insbesondere von Speiseeis, wobei der Stiel (10) eine fluoreszierende Flüssigkeit aufweist sowie die Verwendung eines solchen Stiels.

## Beschreibung

Die vorliegende Erfindung betrifft einen Stiel zur Halterung eines Lebensmittels, insbesondere von Speiseeis.

Speiseeis wird in den verschiedensten Darbietungsformen angeboten. So ist z. B. ein sogenanntes Eis am Stiel bekannt, bei dem das Eis unmittelbar beispielsweise an einem Holzstiel angefroren ist. Darüber hinaus sind Darbietungsformen von Eis bekannt, bei denen eine zylindrische Hülse vorgesehen ist, die am unteren Ende einen Schieber aufweist, wobei der Schieber einen Stiel besitzt, wobei mit Hilfe des Stiels der Schieber in der zylindrischen Hülse entsprechend dem Essfortschritt am Eis nach oben geschoben wird. Solche Behältnisse werden auch als Push-ups bezeichnet.

Aus dem Stand der Technik sind nun die verschiedensten Ausbildungen von Stielen, insbesondere auch für Speiseeis, bekannt. So ist z. B. ein hohlzylindrisch ausgebildeter Stiel für Speiseeis bekannt, der der Aufnahme von Schokoladenlinsen dient.

Darüber hinaus ist beispielsweise aus der DE 100 41 081 A1 bekannt, einen Stiel, beispielsweise für Speiseeis, mit einer Lichtquelle, z. B. in Form einer LED, zu versehen.

Eine ganz ähnliche Gestaltung ist aus der DE 299 20 758 U1 bekannt, und zwar insofern, als der Stiel dort mit einem Hohlraum versehen ist, wobei in dem Hohlraum ein elektrischer Signalgeber zur Erzeugung eines optischen und/oder akustischen Signals vorgesehen ist. Die Ausbildung eines Stiels mit einem solchen Signalgeber stellt sich im Wesentlichen als eine verkaufsfördernde Maßnahme dar, wobei unter Umständen auch eine Warnfunktion hinzukommt und zwar insofern, als dass z. B. bei einem optischen Signalgeber auch in der Dunkelheit erkennbar ist, dass eine Person ein solches Speiseeis in der Hand hält und insofern, insbesondere im Gedränge, Abstand von einer solchen Person zu halten ist, um beispielsweise eine Verschmutzung der eigenen Bekleidung zu vermeiden.

Nachteilig an diesen bekannten Ausführungsformen von Stielen zur Halterung von Lebensmitteln und hier insbesondere von Speiseeis ist, dass diese dort bekannten Signalgeber immer eine Energiequelle benötigen, beispielsweise in Form einer Batterie. Da der Stiel eines Speiseeises bzw. die Verpackung insgesamt nach Gebrauch üblicherweise im normalen Hausmüll entsorgt wird, ergeben sich insbesondere bei der Verwendung von herkömmlichen Batterien als Energiequelle erhebliche ökologische Probleme.

Der Erfindung liegt daher die Aufgabe zu Grunde, einen Stiel zur Halterung eines Lebensmittels bereitzustellen, der in der Lage ist zu leuchten, der aber dennoch auf eine gesonderte Energiequelle, insbesondere in Form einer Batterie, verzichtet.

Die Aufgabe wird erfindungsgemäß dadurch gelöst, dass der Stiel optisch fluoreszierend ausgebildet ist; insbesondere weist der Stiel eine fluoreszierende Flüssigkeit auf. Eine optische Fluoreszenz des Stiels kann z. B. dadurch hergestellt werden, dass der Stiel, der insbesondere aus Kunststoff hergestellt ist, fluoreszierende Stoffe aufweist, oder mit einer entsprechenden Farbe versehen ist. Auch eine fluoreszierende Flüssigkeit in dem hohlen Stiel hat die Eigenschaft in der Dunkelheit zumindest für einen überschaubaren Zeitraum zu leuchten. Derartige fluoreszierende Flüssigkeiten sind hinreichend bekannt, wobei hinzukommt, dass es insbesondere auch solche Flüssigkeiten gibt, die absolut ungiftig sind und daher auch im Bereich von Lebensmitteln verwendet werden. Solche fluoreszierende Flüssigkeiten finden z. B. auch in der Medizin Verwendung.

Weitere vorteilhafte Merkmale sind den Unteransprüchen zu entnehmen.

So ist insbesondere vorgesehen, dass der Stiel einen Hohlraum zur Aufnahme der Flüssigkeit aufweist. In den Hohlraum kann die Flüssigkeit unmittelbar eingegeben werden oder aber der Hohlraum dient der Aufnahme einer Kartusche, die mit einer solchen fluoreszierenden Flüssigkeit gefüllt ist. Des Weiteren ist vorgesehen, dass der Stiel biegsam ausgebildet ist.

Nach einem besonderen Merkmal der Erfindung ist weiterhin vorgesehen, dass der Stiel oder die Kartusche zwei Kammern zur Aufnahme zweier Flüssigkeiten aufweist, wobei durch Biegen oder Knicken des Stiels oder der Kartusche die Kammern zueinander durchlässig werden und sich die Flüssigkeiten miteinander vermischen, wobei hierdurch die fluoreszierende Wirkung erzeugt wird. Die beiden Kammern werden hierbei durch zwei geschlossene Zylinder oder Röhrchen gebildet, wobei vorteilhaft der eine Zylinder in dem anderen Zylinder beabstandet zu diesem schwimmt. Beide Zylinder besitzen eine Flüssigkeit, wobei zumindest der innere Zylinder oder das Röhrchen bei Biegung bricht, so dass sich die beiden Flüssigkeiten vermischen können. Eine solche Gestaltung ist auch unter dem Begriff "Knicklicht (englisch: glowstick)" bekannt. Hierbei werden - wie bereits oben beschrieben - durch Knicken zwei zuvor in getrennten Kammern angeordnete Flüssigkeiten miteinander vermischt, die dann reagieren, was schlussendlich zum Leuchten der fluoreszierenden Flüssigkeit führt.

Wie bereits an andere Stelle erläutert, kann der Stiel unmittelbar mit dem Eis in Verbindung stehen oder aber auch mittelbar durch einen hohlzylindrischen Verpackungsbehälter. Der hohlzylindrische Verpackungsbehälter weist an seinem unteren Ende einen kolbenartigen Schieber auf, wobei der Stiel an diesem kolbenartigen Schieber vorzugsweise lösbar befestigt ist, wobei der Schieber selbst axial beweglich von dem hohlzylindrischen Verpackungsbehälter aufnehmbar ist. Durch die lösbare Verbindung des Stiels mit dem Schieber, beispielsweise durch eine Verschraubung, wird erreicht, dass der Stiel auch gesondert Verwendung finden kann. In diesem Zusammenhang ist darauf hinzuweisen, dass die fluoreszierende Wirkung der Flüssigkeit in dem Stiel über eine Zeitdauer von etwa 8 bis 10 Stunden anhält. Der Genuss eines Speiseeises beschränkt sich auf wenige Minuten, so dass der Stiel insofern beispielsweise in einer Diskothek auch als Schmuckstück Verwendung finden kann, indem man sich diesen Stiel z. B. um den Hals hängt. Insofern ist vorteilhaft vorgesehen, dass der Stiel eine tangential angeordnete Nut zur Aufnahme eines Bandes aufweist, mit dem ein solcher Stiel umgehängt werden kann.

Nach einem weiteren Merkmal der Erfindung ist das hohlzylindrische Verpackungsbehältnis an seinem Entnahmeende mit einer Mundrolle versehen. Eine solche Mundrolle stellt sich als ein Wulst dar, der über die Außenkante der hohlzylindrischen Verpackung vorsteht, und insofern der Aufnahme eines Rast- oder Schnappdeckels dienen kann. Der Vorteil einer solchen Mundrolle besteht weiterhin darin, dass eine solche hohlzylindrische Verpackung bei der Zuführung an den Mund bei Genuss des Speiseeises die Haut im Mundbereich nicht einschneidet.

Anhand der Zeichnung wird die Erfindung nachstehend beispielhaft näher erläutert.

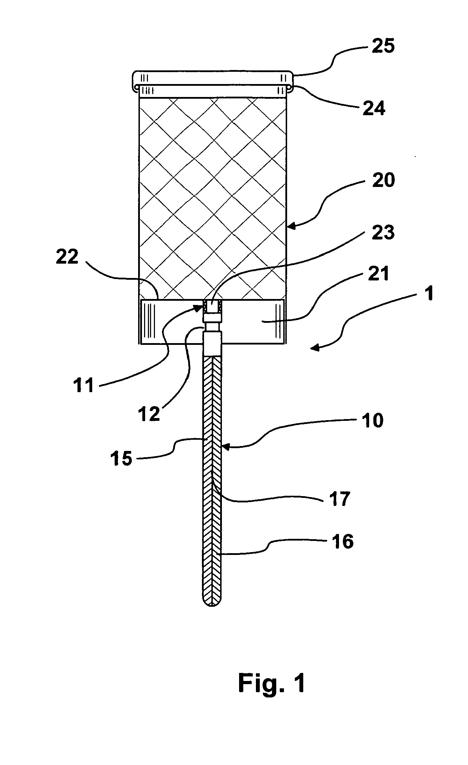

- Figur 1: zeigt ein Behältnis mit Stiel, wobei der Stiel durch eine längs des Stiels verlaufende Teilung in zwei Kammern unterteilt ist;
- Figur 2: zeigt den Stiel als solchen zur Aufnahme einer Kartusche, die in den Stiel eingeschoben wird.

Das Behältnis 1 zur Aufnahme von Speiseeis umfasst einen Stiel 10 und ein hohlzylindrisches Behältnis 20 zur Aufnahme des Speiseeises. Das hohlzylindrische Behältnis 20 weist an seinem unteren Ende einen kolbenartigen Schieber 21 auf, dessen Boden 22 einen vorstehenden runden Ansatz 23 zeigt. Der Ansatz 23 ist mit einem Gewinde versehen, auf dem der Stiel 10 aufschraubbar ist. Hierzu besitzt der Stiel 10 im Bereich seines oberen Endes ein Innengewinde 11. Unmittelbar unterhalb des Gewindes 11 weist der Stiel eine tangential umlaufende Nut 12 auf, an der ein Band befestigt werden kann, um den Stiel beispielsweise um den Hals zu hängen. Denkbar ist auch die Anbringung einer Öse zu Aufnahme des Bandes. Das hohlzylindrische Behältnis besitzt an seinem oberen Ende eine sogenannte Mundrolle 24, die insbesondere auch der schnappbaren Aufnahme eines Deckels 25 dient.

Der Gegenstand der Erfindung ist nun die Ausbildung des Stiels 10. Der Stiel 10 umfasst zwei Kammern 15, 16, die durch eine Wandung 17 voneinander getrennt sind. Beide Kammern 15, 16 nehmen eine Flüssigkeit auf, die dann, wenn sie miteinander in Verbindung gebracht werden, über einen bestimmten Zeitraum fluoreszieren. In Verbindung gebracht werden können die beiden Flüssigkeiten in den Kammern dadurch, dass der Stiel verbogen wird und hierdurch die Wandung 17 bricht oder durchlässig wird, so dass sich die beiden Flüssigkeiten vermischen können.

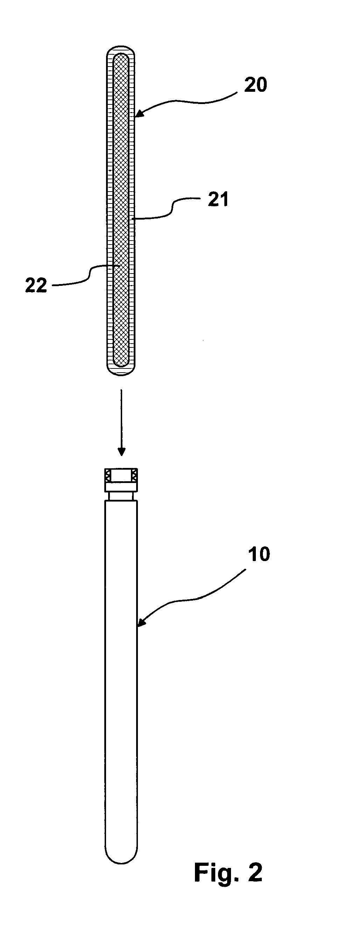

Wie bereits an anderer Stelle erläutert, kann in den Stiel, wenn dieser nicht in Kammern unterteilt, sondern hohlzylindrisch ausgebildet ist, auch eine entsprechend ausgebildete Kartusche 20 mit zwei Kammern 21, 22 eingeführt werden (Figur 2). Diese beiden Kammern 21, 22 werden durch zwei Zylinder oder Röhrchen 21, 22 gebildet, wobei der Zylinder 22 in dem Zylinder 21 beabstandet zu diesem gelagert ist. Beide Zylinder weisen eine Flüssigkeit auf, d. h. der Zylinder 22 "schwimmt" im Zylinder 21. Durch Biegen des Stiels 10 bricht zumindest der eine innere Zylinder, mit der Folge, dass sich die Flüssigkeiten der beiden Zylindern vermischen und das Gemisch optisch fluoresziert.

## Patentansprüche

1. Stiel zur Halterung eines Lebensmittels, insbesondere von Speiseeis,
**dadurch gekennzeichnet,**
**dass** der Stiel (10) fluoreszierend ausgebildet ist.

2. Stiel nach Anspruch 1,
**dadurch gekennzeichnet,**
**dass** der Stiel (10) eine fluoreszierende Flüssigkeit aufweist.

3. Stiel nach Anspruch 2,
**dadurch gekennzeichnet,**
**dass** der Stiel (10) einen Hohlraum zur Aufnahme der Flüssigkeit aufweist.

4. Stiel nach einem der voranstehenden Ansprüche,
**dadurch gekennzeichnet,**
**dass** der Stiel (10) biegsam ist.

5. Stiel nach einem der voranstehenden Ansprüche,
**dadurch gekennzeichnet,**
**dass** der Stiel (10) eine Kartusche (20) mit einer fluoreszierenden Flüssigkeit aufweist.

6. Stiel nach einem der voranstehenden Ansprüche,
**dadurch gekennzeichnet,**
**dass** der Stiel oder die Kartusche zwei Kammern (15, 16) zur Aufnahme zweier Flüssigkeiten aufweist, wobei durch Biegen oder Knicken des Stiels (10) oder der Kartusche die Kammern zueinander durchlässig werden und die Flüssigkeiten sich miteinander vermischen.

7. Stiel nach Anspruch 6,
**dadurch gekennzeichnet,**
**dass** die Kartusche (20) zur Bildung der beiden Kammern zwei Zylinder (21, 22) umfasst.

8. Stiel nach Anspruch 7,
**dadurch gekennzeichnet,**
**dass** der Zylinder (22) in dem Zylinder (21) beabstandet zu diesem angeordnet ist, wobei die beiden Zylinder die Kartusche (20) bilden.

9. Stiel nach Anspruch 7,
**dadurch gekennzeichnet,**
**dass** die Zylinder (21, 22) jeweils eine Flüssigkeit aufweisen, die bei Vermischung fluoreszieren.

10. Stiel nach Anspruch 7,
**dadurch gekennzeichnet,**
**dass** zumindest der eine innere Zylinder aus Glas ausgebildet sind.

11. Stiel nach einem der voranstehenden Ansprüche,
**dadurch gekennzeichnet,**
**dass** der Stiel ein hohlzylindrisches Verpackungsbehältnis (20) aufweist.

12. Stiel nach Anspruch 11,
**dadurch gekennzeichnet,**
**dass** der Stiel an einem kolbenartigen Schieber (21) angeordnet ist, der axialbeweglich von dem hohlzylindrischen Verpackungsbehältnis (20) aufnehmbar ist.

13. Stiel nach Anspruch 11,
**dadurch gekennzeichnet,**
**dass** das hohlzylindrische Verpackungsbehältnis (20) an seinem Entnahmeende eine Mundrolle (24) aufweist.

14. Stiel nach einem der voranstehenden Ansprüche,
**dadurch gekennzeichnet,**
**dass** der Stiel (10) lösbar mit dem Schieber (21) verbindbar ist.

15. Stiel nach einem der voranstehenden Ansprüche,
**dadurch gekennzeichnet,**
**dass** der Stiel (10) eine tangential angeordnete Nut (12) zur Aufnahme eines Bandes aufweist.

16. Lebensmittel, insbesondere Speiseeis mit einem Stiel zur Halterung des Lebensmittels,
**dadurch gekennzeichnet,**
**dass** der Stiel fluoreszierend ausgebildet ist.

17. Verwendung eines fluoreszierenden Stiels zur Halterung eines Lebensmittels, insbesondere von Speiseeis.
